# EUROPÄISCHE PATENTSCHRIFT

(11) **EP 3 165 801 B1**
(45) Veröffentlichungstag und Bekanntmachung des Hinweises auf die Patenterteilung: **25.04.2018**
(21) Anmeldenummer: 15193055.9
(22) Anmeldetag: 04.11.2015
(51) Int. Cl.: F16K 31/06

(54) **VERFAHREN UND VORRICHTUNG ZUM ANSTEUERN EINES MAGNETVENTILS**
METHOD AND DEVICE FOR CONTROLLING A SOLENOID VALVE
PROCEDE ET DISPOSITIF DESTINES A LA COMMANDE D'UNE ELECTROVANNE

(43) Veröffentlichungstag der Anmeldung: 10.05.2017
(73) Patentinhaber: Selectron Systems AG, 3250 Lyss (CH)
(72) Erfinder: HOFER, Urs, 3273 Kappelen (CH)
(74) Vertreter: Prüfer & Partner mbB Patentanwälte · Rechtsanwälte

(56) Entgegenhaltungen:
- EP-A2- 1 407 958
- WO-A1-2006/037715
- US-A1- 2008 238 391

## Beschreibung

Die vorliegende Erfindung betrifft ein Verfahren und eine Vorrichtung zum Ansteuern eines Magnetventils derart, dass ein Anker des Magnetventils eine Zwischenstellung zwischen einer geöffneten und einer geschlossenen Stellung einnimmt und der Anker mit geringen Auslenkungen um diese Zwischenstellung herum schwingt.

Die vorliegende Erfindung betrifft insbesondere ein Verfahren und eine Vorrichtung zum Regeln eines elektrischen Spulenstroms eines Magnetventils, dessen Anker der Einstellung eines gewünschten Volumenstroms in einer Hydraulikvorrichtung dient. Zur Reduzierung seiner Haftreibung und/oder seiner Magnethysterese wird der Anker ständig mit einer leichten Schwingung um seine Mittellage beaufschlagt, sodass das Magnetventil schneller und präziser geschaltet werden kann.

**Fig. 2** zeigt ein herkömmliches Verfahren zum Ansteuern eines Magnetventils, wie es aus der WO 2006/037715 A1 bekannt ist. Bei diesem herkömmlichen Verfahren wird ein Strom-Sollwert Is in einem Komparator 28 mit einem Strom-Messwert Im verglichen und wird der daraus erzeugte Differenzstromwert Id einem Stromregler (z.B. PID-Regler) 14 zugeführt, der daraus einen Strom-Stellwert Ip erzeugt. Dem Strom-Stellwert Ip wird ein von einem Modulationssignalgenerator (z.B. Dither-Einheit) 18 zur Verfügung gestellter Rippelstromwert (Dither-Signal) Ir überlagert, bevor ein Steuersignalgenerator (z.B. PWM-Einheit) 20 daraus ein Steuersignal S zum Ansteuern des Magnetventils 12 generiert. Der Komparator 28 und der Stromregler 14 sind dabei in einem Hauptrechner 10a enthalten, der bereits in einem Steuergerät zum Beispiel eines Fahrzeugs vorhanden ist, während die Dither-Einheit 18 und die PWM-Einheit 16 in einer unabhängigen Rechnereinheit 10b enthalten sind. Ferner ist eine Filtereinrichtung 22 für den Strom-Messwert Im vorgesehen.

Es ist die Aufgabe der vorliegenden Erfindung, ein verbessertes Verfahren und eine verbesserte Vorrichtung zum Ansteuern eines Magnetventils zu schaffen, mit denen ein Anker des Magnetventils eine Zwischenstellung zwischen einer geöffneten und einer geschlossenen Stellung einnehmen und mit geringen Auslenkungen um diese Zwischenstellung herum schwingen kann und die einen einfachen Aufbau und einen geringen Bedarf an Rechenleistung ermöglichen.

Diese Aufgabe wird gelöst durch die Lehre der unabhängigen Ansprüche. Vorteilhafte Ausgestaltungen der Erfindung sind Gegenstand der abhängigen Ansprüche.

Das erfindungsgemäße Verfahren zum Ansteuern eines Magnetventils enthält die folgenden Schritte:
- Erzeugen eines Strom-Sollwert auf Basis eines Strom-Zielwerts, wobei dem Strom-Zielwert ein Rippelstromwert überlagert wird;
- Vergleichen des Strom-Sollwerts mit einem Strom-Messwert und Erzeugen eines Differenzstromwerts;
- Erzeugen eines Strom-Stellwerts aus dem Differenzstromwert in einem Stromregler; und
- Erzeugen eines Steuersignals zum Ansteuern des Magnetventils aus dem Strom-Stellwert in einem Steuersignalgenerator.

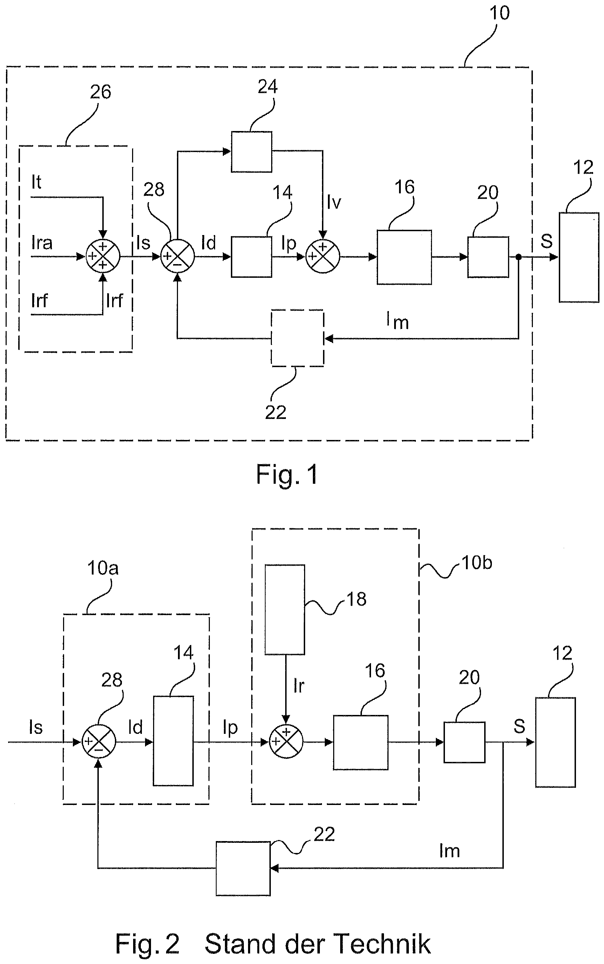

Im Gegensatz zu dem eingangs beschriebenen herkömmlichen Verfahren wird gemäß der Erfindung vorgeschlagen, einen Rippelstromwert zum Erzeugen von Schwingungen des Ankers des Magnetventils um seine Mittellage bereits in den Strom-Sollwert zu integrieren. Als Ergebnis kann das gesamte Verfahren zum Ansteuern des Magnetventils in nur einer Rechnereinheit bzw. nur einem Gerät durchgeführt werden. Auch kann die insgesamt benötigte Rechenleistung im Vergleich zum Beispiel zu dem in Fig. 2 veranschaulichten herkömmlichen Verfahren reduziert werden.

In einer vorteilhaften Ausgestaltung der Erfindung wird der Rippelstromwert aus einem Rippelstrom-Amplitudensollwert und einem Rippelstrom-Frequenzsollwert gebildet. Mit anderen Worten ist der Rippelstromwert in Amplitude und Frequenz einstellbar.

In einer weiteren vorteilhaften Ausgestaltung der Erfindung bildet ein zeitlicher Verlauf des Rippelstromwerts ein Dreiecksignal. Ein solches Dreiecksignal ist relativ einfach zu berechnen, sodass insgesamt weniger Rechenleistung benötigt wird. So sind für die Berechnung eines Dreiecksignals zum Beispiel weniger Stützpunkte erforderlich als für ein Sinussignal.
In einer weiteren vorteilhaften Ausgestaltung der Erfindung erfolgt die Erzeugung des Strom-Sollwerts mittels Softwaretechnik.
In einer noch weiteren vorteilhaften Ausgestaltung der Erfindung wird dem vom Stromregler erzeugten Strom-Stellwert ein Verstärkungssignal überlagert, das vorzugsweise aus einem Vergleich des Strom-Sollwerts mit dem Strom-Messwert generiert wird.
Die erfindungsgemäße Vorrichtung zum Ansteuern eines Magnetventils weist einen Komparator, dem ein Strom-Sollwert und ein Strom-Messwert zugeführt werden und der einen Differenzstromwert erzeugt; einen Stromregler, dem der Differenzstromwert zugeführt wird und der einen Strom-Stellwert erzeugt; und einen Steuersignalgenerator, dem der Strom-Stellwert zugeführt wird und der ein Steuersignal zum Ansteuern des Magnetventils erzeugt, auf. Die Vorrichtung weist gemäß der Erfindung zudem einen Stromsollwertgenerator auf, der ausgestaltet ist, den Strom-Sollwert auf Basis eines Strom-Zielwerts durch Überlagerung eines Rippelstromwerts zu erzeugen.
Mit dieser Vorrichtung können die gleichen Vorteile wie mit dem oben beschriebenen Verfahren der Erfindung erzielt werden.
In einer vorteilhaften Ausgestaltung der Erfindung ist der Stromsollwertgenerator ausgestaltet, den Strom-Sollwert auf Basis des Strom-Zielwerts, eines Rippelstrom-Amplitudensollwerts und eines Rippelstrom-Frequenzsollwerts zu erzeugen.
In einer vorteilhaften Ausgestaltung der Erfindung bildet ein zeitlicher Verlauf des Rippelstromwerts ein Dreiecksignal.
In einer weiteren vorteilhaften Ausgestaltung der Erfindung ist der Stromsollwertgenerator als Softwarelösung ausgestaltet.

In einer noch weiteren vorteilhaften Ausgestaltung der Erfindung ist ferner eine Verstärkereinrichtung vorgesehen, die dem vom Stromregler erzeugten Strom-Stellwert ein Verstärkungssignal überlagert, das vorzugsweise aus einem Vergleich des Strom-Sollwerts mit dem Strom-Messwert generiert wird.

Obige sowie weitere Vorteile und Merkmale der Erfindung werden aus der nachfolgenden Beschreibung eines Ausführungsbeispiels anhand der beiliegenden Zeichnungen besser verständlich. Darin zeigen, größtenteils schematisch:
- Fig. 1: einen Aufbau einer Vorrichtung zum Ansteuern eines Magnetventils gemäß einem Ausführungsbeispiel der Erfindung; und
- Fig. 2: einen Aufbau einer herkömmlichen Vorrichtung zum Ansteuern eines Magnetventils.

**Fig. 1** zeigt den Aufbau und die Funktionsweise einer Vorrichtung 10 zum Ansteuern eines Magnetventils 12 gemäß einem Ausführungsbeispiel der Erfindung. Die Vorrichtung 10 ist vorzugsweise in nur einem Gerät bzw. nur einer Rechnereinheit realisiert und im Wesentlichen durch einen Regelkreis gebildet.

Bei dem Magnetventil 12 handelt es sich zum Beispiel um ein hydraulisches Proportional-Ventil, das einen Hubzylinder in eine definierte Position bringen soll.

Die Vorrichtung enthält einen Stromsollwertgenerator 26, der als Softwarelösung realisiert ist. Dieser Stromsollwertgenerator 26 bildet aus einem Strom-Zielwert It und einem Rippelstromwert Ir mittels eines Summenbildners einen Strom-Sollwert Is. Der Rippelstromwert Ir setzt sich dabei aus einem Rippelstrom-Amplitudensollwert Ira und einem Rippelstrom-Frequenzsollwert Irf zusammen, d.h. es können sowohl Amplitude als auch Frequenz des Rippelstromwerts Ir eingestellt werden. Der Strom-Sollwert Is bildet die Führungsgröße des Regelkreises.

Bei dem Strom-Zielwert It, dem Rippelstrom-Amplitudensollwert Ira und dem Rippelstrom-Frequenzsollwert Irf handelt es sich vorzugsweise jeweils um digitale 16-Bit-Werte, die von einer speicher-programmierbaren Steuerung vorgegeben werden.

Der Rippelstromwert Ir wird dabei bevorzugt als Dreiecksignal gebildet. Da ein Dreiecksignal für seine Berechnung weniger Stützpunkte als zum Beispiel für ein Sinussignal benötigt, ist das Dreiecksignal relativ einfach zu berechnen und erfordert dementsprechend weniger Rechenleistung.

In einem Komparator 28 wird dieser Strom-Sollwert Is mit einem Strom-Messwert Im verglichen, der von einer Strommesseinrichtung 20 erfasst und rückgeführt wird. Der Komparator 28 erzeugt daraus einen Differenzstromwert Id, der die Regelabweichung des Regelkreises bildet.

Dieser Differenzstromwert Id wird einem Stromregler 14 zugeführt, der vorzugsweise als PID-Regler (Proportional, Integral- und Differential-Regler) ausgestaltet ist. Der Stromregler 14 generiert dann einen Strom-Stellwert Ip, der die Stellgröße des Regelkreises bildet.

Der Strom-Stellwert Ip wird dann einem Steuersignalgenerator 16 zugeführt, der vorzugsweise als PWM-Einrichtung (Pulsweitenmodulations-Einrichtung) ausgestaltet ist. Der Steuersignalgenerator 16 generiert dann ein Steuersignal S, das die Regelgröße des Regelkreises bildet. Der Strom-Stellwert Ip kann in diesem Fall zum Beispiel eine Ausgangsgröße für das Tastverhältnis des PWM-Steuersignals S bilden.

Das Steuersignal S regelt schließlich den elektrischen Spulenstrom des Magnetventils 12. Das Steuersignal S weist dabei eine ausreichend hohe Frequenz auf (z.B. 1 kHz oder mehr), dass der Anker des Magnetventils 12 eine Zwischenstellung, bevorzugt eine Mittellage zwischen einer geöffneten und einer geschlossenen Stellung einnimmt. Der dem Strom-Zielwert It überlagerte Rippelstromwert Ir bewirkt dabei, dass der Anker des Magnetventils 12 eine leichte Schwingung um diese Zwischenstellung bzw. Mittellage herum ausführt. Die Frequenz des Rippelstromwerts Ir (z.B. im Bereich zwischen 50 und 500 Hz) ist dabei niedriger gewählt als die Frequenz der Pulsweitenmodulation.

Wie in Fig. 1 angedeutet, kann in dem Rückführungspfad des Strom-Messwerts Im optional eine Filtereinrichtung 22 vorgesehen sein. Die Filtereinrichtung 22 ist vorzugsweise als Tiefpassfilter ausgestaltet, dass die hochfrequenten Anteile des Strom-Messwerts Im herausfiltert, damit der Stromregler 14 möglichst nur auf die Strommittelwerte regeln kann.

Zur Anpassung an die jeweilige Anwendung weist die Vorrichtung 10 bevorzugt ferner eine Verstärkereinrichtung 24 auf, die vorzugsweise als ein FFW (Feed Forward) - Verstärker ausgestaltet ist. Die Verstärkereinrichtung 24 greift am Komparator 28 den Differenzstromwert Id ab und überlagert ihn nach entsprechender Verstärkung als Verstärkungssignal Iv dem vom Stromregler 14 erzeugten Strom-Stellwert Ip.

### BEZUGSZEICHENLISTE

- 10: Steuervorrichtung
- 10a: Hauptrechner
- 10b: Rechnereinheit
- 12: Magnetventil
- 14: Stromregler, z.B. PID-Regler
- 16: Steuersignalgenerator, z.B. PWM-Einheit
- 18: Modulationssignalgenerator, z.B. Dither-Einheit
- 20: Strommesseinrichtung
- 22: Filtereinrichtung
- 24: Verstärkereinrichtung, z.B. FFW-Verstärker
- 26: Stromsollwertgenerator
- 28: Komparator

- Id: Differenzstromwert
- Im: Strom-Messwert
- Ip: Strom-Stellwert
- Ir: Rippelstromwert
- Ira: Rippelstrom-Amplitudensollwert
- Irf: Rippelstrom-Frequenzsollwert
- Is: Strom-Sollwert
- It: Strom-Zielwert
- Iv: Verstärkungssignal
- S: Steuersignal

## Patentansprüche

1. Verfahren zum Ansteuern eines Magnetventils (12), mit den Schritten:
- Erzeugen eines Strom-Sollwert (Is) auf Basis eines Strom-Zielwerts (It), wobei dem Strom-Zielwert (It) ein Rippelstromwert (Ir) überlagert wird;
- Vergleichen des Strom-Sollwerts (Is) mit einem Strom-Messwert (Im) und Erzeugen eines Differenzstromwerts (Id);
- Erzeugen eines Strom-Stellwerts (Ip) aus dem Differenzstromwert (Id) in einem Stromregler (14); und
- Erzeugen eines Steuersignals (S) zum Ansteuern des Magnetventils (12) aus dem Strom-Stellwert (Ip) in einem Steuersignalgenerator (16).

2. Verfahren nach Anspruch 1, bei welchem
der Rippelstromwert (Ir) aus einem Rippelstrom-Amplitudensollwert (Ira) und einem Rippelstrom-Frequenzsollwert (Ifa) gebildet wird.

3. Verfahren nach Anspruch 1 oder 2, bei welchem
ein zeitlicher Verlauf des Rippelstromwerts (Ir) ein Dreiecksignal bildet.

4. Verfahren nach einem der vorhergehenden Ansprüche, bei welchem
die Erzeugung des Strom-Sollwerts (Is) mittels Softwaretechnik erfolgt.

5. Verfahren nach einem der vorhergehenden Ansprüche, bei welchem
dem vom Stromregler (14) erzeugten Strom-Stellwert (Ip) ein Verstärkungssignal (Iv) überlagert wird, das vorzugsweise aus einem Vergleich des Strom-Sollwerts (Is) mit dem Strom-Messwert (Im) generiert wird.

6. Vorrichtung (10) zum Ansteuern eines Magnetventils (12), aufweisend:
einen Komparator (28), dem ein Strom-Sollwert (Is) und ein Strom-Messwert (Im) zugeführt werden und der einen Differenzstromwert (Id) erzeugt;
einen Stromregler (14), dem der Differenzstromwert (Id) zugeführt wird und der einen Strom-Stellwert (Ip) erzeugt; und
einen Steuersignalgenerator (16), dem der Strom-Stellwert (Ip) zugeführt wird und der ein Steuersignal (S) zum Ansteuern des Magnetventils (12) erzeugt,
**gekennzeichnet durch**
einen Stromsollwertgenerator (26), der ausgestaltet ist, den Strom-Sollwert (Is) auf Basis eines Strom-Zielwerts (It) durch Überlagerung eines Rippelstromwerts (Ir) zu erzeugen.

7. Vorrichtung nach Anspruch 6, bei welcher
der Stromsollwertgenerator (26) ausgestaltet ist, den Strom-Sollwert (Is) auf Basis des Strom-Zielwerts (It), eines Rippelstrom-Amplitudensollwerts (Ira) und eines Rippelstrom-Frequenzsollwerts (Ifa) zu erzeugen.

8. Vorrichtung nach Anspruch 6 oder 7, bei welcher
ein zeitlicher Verlauf des Rippelstromwerts (Ir) ein Dreiecksignal bildet.

9. Vorrichtung nach einem der Ansprüche 6 bis 8, bei welcher der Stromsollwertgenerator (26) als Softwarelösung ausgestaltet ist.

10. Vorrichtung nach einem der Ansprüche 6 bis 9, bei welcher
eine Verstärkereinrichtung (24) vorgesehen ist, die dem vom Stromregler (14) erzeugten Strom-Stellwert (Ip) ein Verstärkungssignal (Iv) überlagert, das vorzugsweise aus einem Vergleich des Strom-Sollwerts (Is) mit dem Strom-Messwert (Im) generiert wird.

## Claims

1. A method of driving a solenoid valve (12) comprising the steps of:
- generating a current command value (Is) based on a current target value (It), wherein a ripple current value (Ir) is superimposed on said current target value (It);
- comparing said current command value (Is) with a measured current value (Im) and generating a difference current value (Id);
- generating a current control value (Ip) from said difference current value (Id) in a current regulator (14); and
- generating a control signal (S) for driving said solenoid valve (12) from said current control value (Ip) in a control signal generator (16).

2. The method according to claim 1, wherein
said ripple current value (Ir) is formed from a ripple current amplitude set value (Ira) and a ripple current frequency set value (Ifa).

3. The method according to claim 1 or 2, wherein
a time profile of said ripple current value (Ir) forms a triangular signal.

4. The method according to any one of preceding claims, wherein
the generation of said current command value (Is) is carried out by means of software technology.

5. The method according to any one of preceding claims, wherein
a gain signal (Iv) is superimposed on said current control value (Ip) generated by said current regulator (14), said gain signal being preferably generated from a comparison of said current command value (Is) with said measured current value (Im).

6. An apparatus (10) for driving a solenoid valve (12), comprising:
a comparator (28) to which a current command value (Is) and a measured current value (Im) are supplied and which generates a difference current value (Id);
a current regulator (14) to which said difference current value (Id) is supplied and which generates a current control value (Ip); and
a control signal generator (16) to which said current control value (Ip) is supplied and which generates a control signal (S) for driving said solenoid valve (12),
**characterized by**
a current command value generator (26) being configured to generate said current command value (Is) on the basis of a current target value (It) by superimposing a ripple current value (Ir).

7. The apparatus according to claim 6, wherein
said current command value generator (26) is configured to generate said current command value (Is) on the basis of said current target value (It), a ripple current amplitude set value (Ira) and a ripple current frequency set value (Ifa).

8. The apparatus according to claim 6 or 7, wherein
a time profile of said ripple current value (Ir) forms a triangular signal.

9. The apparatus according to any one of claims 6 to 8, wherein
said current command value generator (26) is designed as a software solution.

10. The apparatus according to any one of claims 6 to 9, wherein
an amplifier device (24) is provided which superimposes a gain signal (Iv) on said current control value (Ip) generated by said current regulator (14), said gain signal being preferably generated from a comparison of said current command value (Is) with said measured current value (Im).

## Revendications

1. Procédé pour piloter une électrovanne (12), comprenant les étapes consistant à :
- générer une valeur de consigne de courant (Is) sur la base d'une valeur cible de courant (It), dans lequel une valeur de courant ondulé (Ir) est superposée à la valeur cible de courant (It) ;
- comparer la valeur de consigne de courant (Is) à une valeur de mesure de courant (Im) et générer une valeur de courant différentiel (Id) ;
- générer une valeur de réglage de courant (Ip) à partir de la valeur de courant différentiel (Id) dans un régulateur de courant (14) ; et
- générer un signal de commande (S) pour piloter l'électrovanne (12) à partir de la valeur de réglage de courant (Ip) dans un générateur de signaux de commande (16).

2. Procédé selon la revendication 1, dans lequel
la valeur de courant ondulé (Ir) est obtenue à partir d'une valeur de consigne d'amplitude de courant ondulé (Ira) et d'une valeur de consigne de fréquence de courant ondulé (Ifa).

3. Procédé selon la revendication 1 ou 2, dans lequel
une variation dans le temps de la valeur de courant ondulé (Ir) forme un signal triangulaire.

4. Procédé selon l'une quelconque des revendications précédentes, dans lequel
la génération de la valeur de consigne de courant (Is) est effectuée au moyen d'une ingénierie logicielle.

5. Procédé selon l'une quelconque des revendications précédentes, dans lequel
un signal d'amplification (Iv) est superposé à la valeur de réglage de courant (Ip) générée par le régulateur de courant (14), lequel signal d'amplification est généré de préférence à partir d'une comparaison de la valeur de consigne de courant (Is) et de la valeur de mesure de courant (Im).

6. Dispositif (10) pour piloter une électrovanne (12), présentant :
un comparateur (28), auquel une valeur de consigne de courant (Is) et une valeur de mesure de courant (Im) sont amenées et qui génère une valeur de courant différentiel (Id) ;
un régulateur de courant (14), auquel la valeur de courant différentiel (Id) est amenée et qui génère une valeur de réglage de courant (Ip) ; et
un générateur de signaux de courant (16), auquel la valeur de réglage de courant (Ip) est amenée et qui génère un signal de commande (S) pour piloter l'électrovanne (12),
**caractérisé par**
un générateur de valeurs de consigne de courant (26), qui est configuré pour générer la valeur de consigne de courant (Is) sur la base d'une valeur cible de courant (It) par superposition d'une valeur de courant ondulé (Ir).

7. Dispositif selon la revendication 6, dans lequel
le générateur de valeurs de consigne de courant (26) est configuré pour générer la valeur de consigne de courant (Is) sur la base de la valeur cible de courant (It), d'une valeur de consigne d'amplitude de courant ondulé (Ira) et d'une valeur de consigne de fréquence de courant ondulé (Ifa).

8. Dispositif selon la revendication 6 ou 7, dans lequel
une variation dans le temps de la valeur de courant ondulé (Ir) forme un signal triangulaire.

9. Dispositif selon l'une quelconque des revendications 6 à 8, dans lequel
le générateur de valeurs de consigne de courant (26) est configuré sous la forme d'une solution logicielle.

10. Dispositif selon l'une quelconque des revendications 6 à 9, dans lequel
est prévu un système amplificateur (24), qui superpose un signal d'amplification (Iv) à la valeur de réglage de courant (Ip) générée par le régulateur de courant (14), lequel signal d'amplification est généré de préférence à partir d'une comparaison entre la valeur de consigne de courant (Is) et la valeur de mesure de courant (Im).
